# FASCICULE DE BREVET EUROPEEN

(11) **EP 3 082 042 B1**
(45) Date de publication et mention de la délivrance du brevet: **01.11.2017**
(21) Numéro de dépôt: 16165497.5
(22) Date de dépôt: 15.04.2016
(51) Int. Cl.: G06F 9/50, G06Q 20/38, G07F 7/10

(54) **PROCÉDÉ DE GESTION D'UNE MÉMOIRE DE CARTE ÉLECTRONIQUE**
VERFAHREN ZUR VERWALTUNG EINES SPEICHERS EINER ELEKTRONISCHEN KARTE
METHOD FOR MANAGING AN ELECTRONIC CARD MEMORY

(30) Priorité: 17.04.2015 FR 1553465
(43) Date de publication de la demande: 19.10.2016
(73) Titulaire: MORPHO, 92130 Issy-Les-Moulineaux (FR)
(72) Inventeur: CERBAH, Sofiane, 92130 Issy-Les-Moulineaux (FR); FROMAGER, Sylvain, Jérôme, 92130 Issy-Les-Moulineaux (FR); GESLAIN, Raphaël, 92130 Issy-Les-Moulineaux (FR); PEPIN, Cyrille, 92130 Issy-Les-Moulineaux (FR)
(74) Mandataire: Regimbeau

(56) Documents cités:
- WO-A1-00/57275
- WO-A1-02/42912
- CN-A- 104 270 507
- US-A1- 2009 113 444
- US-B1- 8 196 131

## Description

### DOMAINE GENERAL

La présente invention concerne un procédé de gestion d'une mémoire de carte électronique.

### ETAT DE L'ART

On connaît de l'état de la technique une carte électronique comprenant un processeur adapté pour exécuter un système d'exploitation et plusieurs programmes applicatifs - communément appelés applications - qui coopèrent avec le système d'exploitation.

La carte électronique comprend une mémoire à laquelle le processeur a accès.

Pour chaque application, sont mémorisés dans la mémoire le programme lui-même, qu'il soit sous forme de code compilé ou de code interprété, et d'autre part des données écrites et/ou lues dans la mémoire par le programme au cours de son exécution par le processeur. Ces données sont, par exemple, des données d'utilisateur, c'est-à-dire des données associées à un utilisateur particulier du programme.

Le nombre de programmes simultanément installables dans la carte électronique dépend donc de la taille de stockage de la mémoire de la carte électronique, qui doit être limitée pour des raisons de coût.

Chaque programme, ou application, est fourni par un éditeur et assure un service déterminé.

Dans des cartes électroniques selon un premier type, chaque programme peut être installé sur commande d'un utilisateur de la carte.

Toutefois, des cartes électroniques selon un deuxième type ne sont pas conçues pour qu'un utilisateur puisse commander lui-même l'installation de telles applications. Les applications sont alors préinstallées dans la mémoire de la carte, lors d'une étape de configuration en usine, avant toute utilisation de la carte.

Lors de cette étape de configuration en usine, il est possible que plusieurs applications fournies par des éditeurs concurrents, assurant un même service, soient préinstallées dans la mémoire de la carte. Cette pré-installation est requise pour une carte selon le deuxième type. Elle est également possible pour une carte selon le premier type, afin d'éviter à l'utilisateur d'avoir à installer lui-même ces applications ou l'inciter à utiliser ces applications préinstallées.

Par exemple, plusieurs applications de type bancaire offrant des services de transaction bancaire concurrents peuvent être préinstallées dans la mémoire.

Or, dans la mesure où ces applications concurrentes assurent un même service, il probable que l'utilisateur n'utilisera que l'une d'entre elles ; une partie de l'espace mémoire de la carte électronique est alors consommée inutilement, et ne peut pas être utilisée pour stocker des données liées à l'application qui est réellement utilisée par l'utilisateur.

Le document US8196131 divulgue l'effacement d'une application s'exécutant sur une carte électronique mais il se cantonne à un mécanisme initié par l'utilisateur via un outil de configuration.

Le document CN104270507 propose bien d'effacer des applications redondantes dans un terminal mobile mais il se base sur des critères géographiques ou linguistiques et là encore, il n'y a ni détection d'équivalence de service, ni effacement automatique.

### PRESENTATION DE L'INVENTION

Un but de l'invention est d'augmenter l'espace mémoire disponible dans une carte électronique présentant un espace mémoire total prédéfini.

Afin d'atteindre ce but, l'invention propose le procédé selon la revendication 1.

La première écriture de données dans le premier espace mémoire signifie implicitement que le premier programme est d'intérêt pour l'utilisateur de la carte électronique. Dès lors, il est considéré par la présente invention que le deuxième programme fournissant un même service que le premier programme est probablement sans intérêt pour ce même utilisateur. Le procédé libère automatiquement une partie de la mémoire consommée inutilement par le code du deuxième programme. Cette partie de la mémoire libérée devient alors disponible pour d'autres usages.

Ce procédé peut également être complété par les caractéristiques suivantes, prises seules ou en une quelconque de leurs combinaisons techniquement possibles.

Le premier espace mémoire peut être accessible sélectivement par le premier programme.

Le procédé peut comprendre une détermination d'une information indiquant si le premier programme et le deuxième programme mettent en oeuvre ou non un service identique, la libération étant sélectivement mise en oeuvre si l'information indique que les deux programmes mettent tous deux en oeuvre un service identique.

Le service identique peut être un service de transaction bancaire.

Le procédé peut comprendre une détection de tout programme tiers mémorisé dans la mémoire et configuré pour commander une exécution du deuxième programme, la libération du deuxième espace étant sélectivement mise en oeuvre si aucun programme tiers n'est détecté.

Le procédé peut comprendre en outre l'allocation, dans la zone de la mémoire rendue disponible par la libération du deuxième espace mémoire, d'un troisième espace mémoire accessible par le premier programme.

L'invention proposé également un produit programme d'ordinateur comprenant des instructions de code de programme pour l'exécution des étapes du procédé qui précède, lorsque ce programme est exécuté par un processeur.

L'invention propose également une carte électronique comprenant :
- au moins un processeur adapté pour exécuter un premier programme et un deuxième programme, les deux programmes mettant en oeuvre un service identique,
- une mémoire comprenant :
   ∘ un premier espace mémoire accessible par le premier programme,
   ∘ un deuxième espace mémoire mémorisant le code du deuxième programme,
dans laquelle le processeur est configuré pour :
- détecter une première écriture de données dans le premier espace mémoire provoquée par le premier programme dans le premier espace mémoire, et
- commander la libération du deuxième espace mémoire en réponse à la détection.

La mémoire peut être de type flash ou EEPROM.

Il est également proposé une utilisation d'une carte électronique conforme à ce qui précède comme carte personnelle d'authentification.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
La figure 1 représente schématiquement une carte électronique selon un mode de réalisation de l'invention.
La figure 2 est un organigramme d'étapes d'un procédé de gestion de la mémoire de la carte représentée schématiquement en figure 1, selon un mode de réalisation de l'invention.
Les figures 3 à 5 représentent schématiquement le contenu de la mémoire de la carte électronique à des stades différents de mise en oeuvre du procédé selon la figure 2.

Sur l'ensemble des figures, les éléments similaires portent des références identiques.

### DESCRIPTION DETAILLEE DE L'INVENTION

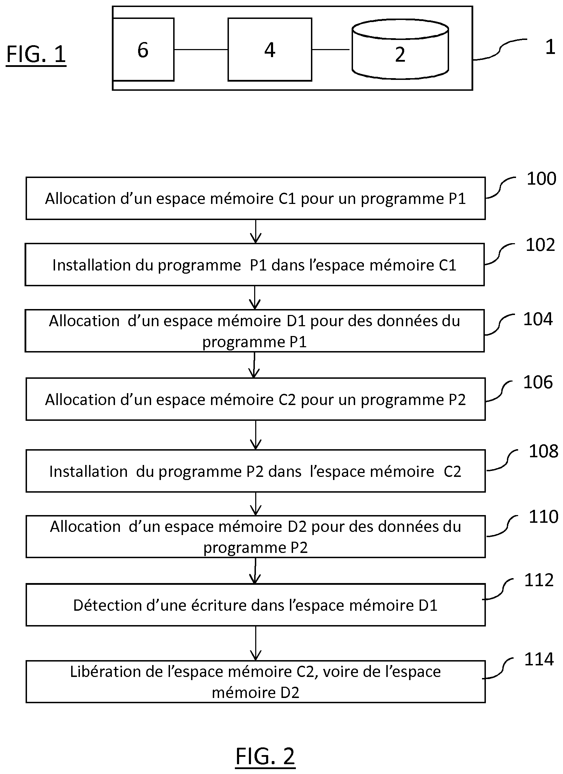

En référence à la **figure 1****,** une carte électronique 1 comprend une mémoire 2, au moins un processeur 4, et une interface de communication 6.

La mémoire 2 comprend une ou plusieurs unités mémoire adaptées pour mémoriser des données de programme. La mémoire 2 est par exemple une unité mémoire unique de type « flash ».

Le processeur 4 est adapté pour exécuter des instructions de code de programmes, et notamment accéder en lecture et en écriture ou en lecture uniquement au contenu de la mémoire 2.

La carte électronique 1 est munie d'un système d'exploitation dont les instructions de code sont mémorisées dans la mémoire 2 et sont exécutables par le processeur 4. Ce système d'exploitation est un programme central qui contrôle l'installation et l'exécution d'autres programmes appelés par la suite programmes applicatifs ou applications.

En particulier, le système d'exploitation est configuré pour définir des espaces mémoires isolés les uns par rapport aux autres dans la mémoire 2 (par exemple des partitions).

Dans la suite, on définit un « espace mémoire » un ensemble de bits consécutifs ou non de la mémoire 2 caractérisé par au moins une paire d'adresses mémoire de début et de fin. On considère que chaque bit de la mémoire peut prendre deux états alternativement: un état « libre », c'est-à-dire qu'il n'est utilisé pour représenter des donnée écrites dans la mémoire, et un état alloué.

L'interface de communication 6 est connectée au processeur 4. Le processeur 4 est également adapté pour traiter des données reçues par l'interface 6.

Dans un mode de réalisation, la carte électronique 1 est une carte personnelle d'authentification, par exemple une carte bancaire d'un utilisateur. La carte électronique 1 peut alors se présenter sous la forme d'une carte du type UICC (« Universal Integrated Circuit Card » en anglais), ou carte SIM (« Subscriber Identity Module », en anglais). L'interface de communication 6 d'une telle carte est adaptée pour coopérer avec une interface de communication d'un terminal, par exemple une borne de transaction bancaire ou un terminal mobile d'utilisateur.

Il va maintenant être décrit un procédé de gestion de la mémoire 2 de la carte électronique 1 en référence à l'organigramme d'étapes illustré en **figure 2****.**

Dans un état initial de la carte électronique 1, la mémoire 2 ne contient que les instructions de code du système d'exploitation dans un espace dédié référencé OS. La mémoire 2 est vierge de toute application.

Les étapes suivantes sont mises en oeuvre par le système d'exploitation alors qu'il est exécuté par le processeur 4 de la carte électronique 1.

Dans une étape 100, le système d'exploitation alloue dans la mémoire 2 un espace mémoire C1, destiné à contenir une application P1.

Dans une étape 102, le système d'exploitation commande l'installation d'une application P1 dans l'espace mémoire C1 ainsi alloué. L'application P1 est reçue par le processeur 4 via l'interface de communication 6. A l'issue de l'étape 102, des instructions de code du programme P1 sont contenues dans l'espace mémoire C1, sous forme de code interprété ou bien de code compilé directement exécutable par le processeur 4.

On comprend que l'application P1 présente une taille en bits inférieure ou égale à la taille en bits de l'espace mémoire C1 préalablement alloué.

Dans une étape 104, le système d'exploitation alloue dans la mémoire 2 un espace mémoire de données D1, destiné à contenir des données propres à l'application P1. Ces données seront écrites et lues par l'application P1 au cours de son exécution ultérieure par le processeur 4, via le système d'exploitation. Il s'agit par exemple de données spécifiques à un utilisateur de l'application P1, et/ou de données de configuration de l'application P1 partagées par plusieurs utilisateurs de l'application P1.

L'espace mémoire D1 est accessible sélectivement par l'application P1.

L'étape 104 d'allocation de l'espace mémoire de données D1 peut être mise en oeuvre avant ou après l'installation 100 de l'application P1 dans l'espace mémoire C1.

Dans une étape 106, le système d'exploitation alloue dans la mémoire 2 un espace mémoire C2, destiné à contenir une application P2.

Dans une étape 108, l'application P2 est installée dans l'espace mémoire C2 ainsi alloué. L'application P2 est par exemple reçue par le processeur 4 via l'interface de communication 6. A l'issue de l'étape 108, des instructions de code du programme P2 sont contenues dans l'espace mémoire C2, sous forme de code interprété ou bien de code compilé directement exécutable par le processeur 4.

Dans une étape 110, le système d'exploitation alloue dans la mémoire 2 un espace mémoire de données D2, destiné à contenir des données propres à l'application P2. Ces données seront écrites et lues par l'application P2 au cours de son exécution ultérieure par le processeur 4, via le système d'exploitation. Il s'agit par exemple de données spécifiques à un utilisateur de l'application P2, et/ou de données de configuration de l'application P2 partagées par plusieurs utilisateurs de l'application P2.

L'espace mémoire D2 est accessible sélectivement par l'application P2.

L'étape 110 d'allocation de l'espace mémoire de données D2 peut être mise en oeuvre avant ou après l'installation 106 de l'application P2 dans l'espace mémoire C2.

Les étapes 100, 102, 104, 106, 108, 110 sont typiquement mises en oeuvre au cours d'une phase de configuration de la carte électronique en usine, avant sa mise dans le commerce et toute utilisation par un utilisateur.

Chaque étape d'allocation 100, 104, 106, 110 peut comprendre un positionnement des bits de l'espace mémoire correspondant C1, D1, C2, D2 à une valeur de référence, de façon à indiquer le caractère non encore utilisé de ces bits. Par exemple, chaque octet de l'espace mémoire considéré est positionné à zéro.

Sont mémorisées dans la mémoire des informations logiques représentatives d'une relation entre plusieurs applications. On prendra dans la suite l'exemple de l'existence dans la mémoire d'une information entre les applications P1 et P2.

Ces informations logiques peuvent être écrites dans l'espace OS lors de la phase de configuration en usine de la carte électronique 1 ou bien préprogrammé.

Les informations logiques peuvent être de différents types.

Un premier type d'information logique est indicatif de l'existence d'une fonction commune, ou un service identique rendu par les applications que cette information logique met en lien.

Par exemple, les deux applications P1 et P2 sont intrinsèquement configurées pour rendre à un utilisateur de la carte électronique 1 un service identique lorsqu'ils sont exécutés par le processeur 4. Dans la suite, on prendra l'exemple de deux applications bancaires fournies par deux fournisseurs concurrents; le service identique mis en oeuvre par les deux applications est dans ce cas un service de transaction bancaire.

Un deuxième type d'information logique est un lien de dépendance entre plusieurs programmes. Ce deuxième type d'information peut par exemple comprendre un programme de référence, et au moins un autre programme tiers, ou programme dépendant, qui serait à la fois présent dans la mémoire 2 et configuré pour commander une exécution du programme de référence. Le programme de référence est en d'autres termes requis pour l'exécution de chaque programme tiers.

On considère également que le système d'exploitation a connaissance du caractère vierge ou non de chaque espace mémoire alloué, en particulier des espaces mémoire de données D1 et D2. Cette connaissance peut être matérialisée par un bit dans la mémoire OS, positionnable à 1 pour indiquer le caractère vierge d'un espace mémoire donné, et positionnable à 0 pour indiquer que cet espace mémoire n'est plus vierge, c'est-à-dire qu'il contient des données utiles.

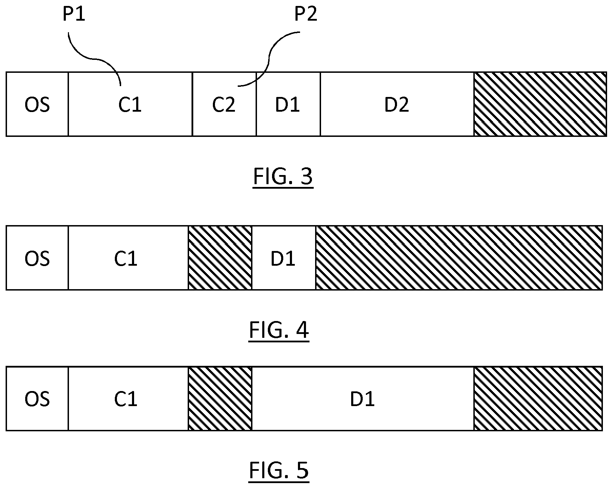

Le contenu de la mémoire 2 est schématiquement représenté en **figure 3** après la mise en oeuvre des étapes 100, 102, 104, 106, 108 et 110. A ce stade, les espaces mémoires de données D1 et D2 sont considérés vierges par le système d'exploitation.

On considère dans la suite qu'un utilisateur entre en possession de la carte électronique 1 qui a été personnalisée et est vendue pour utiliser exclusivement l'application bancaire P1, ce qui rend l'application bancaire P2 inutilisée.

L'utilisateur n'a donc pas besoin d'utiliser l'application P2.

Dans une étape 112, le système d'exploitation détecte une première écriture dans l'espace mémoire de données D1. Cette première écriture intervient typiquement lors d'une première exécution du programme P1 par le processeur 4, sur commande de l'utilisateur de la carte électronique 1. Cette première utilisation déclenche en effet la sauvegarde de données dans l'espace mémoire D1 pour la première fois (données personnelles de l'utilisateur et/ou données de configuration globales ayant un effet au cours d'exécutions ultérieures de l'application P1).

L'étape de détection 112 comprend l'identification du programme associé en propre à l'espace D1 (il s'agit ici du programme P1). Dans le présent mode de réalisation, seul le programme P1 a accès à l'espace D1, il est donc aisé de déduire que les données écrites dans D1 ont été écrites sur instruction du programme P1.

L'étape d'identification 112 comprend en outre la recherche d'au moins une information logique mémorisée dans la mémoire 2 qui mettrait en lien le programme P1 identifié avec un autre programme selon le premier type précité.

La détection est considérée positive si au moins une information du premier type indiquant que le programme P1 et un autre programme rendent un service identique est trouvé dans la mémoire 2.

Sinon, la détection est considérée négative.

Dans l'exemple visé par les figures 3 à 5, une telle information logique, indiquant que le programme P1 et le programme P2 rendent un service identique, est trouvé en mémoire ; la détection est alors considérée comme positive.

En réponse à une détection 112 positive, dans une étape 114, le système d'exploitation libère automatiquement l'espace mémoire C2 contenant les instructions de code de l'application P2, laquelle est concurrente de l'application P1.

L'espace mémoire D2 peut également être libéré dans l'étape 114. La libération de l'espace D2 peut être mise en oeuvre sélectivement en cas de succès de la libération de l'espace C2.

Cette libération 114 comprend par exemple le marquage, dans une table de mappage contrôlée par le système d'exploitation, que la zone de la mémoire 2 qui était occupée par l'espace mémoire C2 et celle occupée par l'espace mémoire D2 sont à présent disponibles pour une future allocation par le système d'exploitation (par exemple pour installer une tierce application). Après la libération 114, le contenu de la mémoire 2 est tel que représenté en **figure 4****.**

Après la libération 114, un nouvel espace mémoire peut être alloué dans toute ou partie de la ou les zones de la mémoire 2 libérées.

Le nouvel espace mémoire peut être rendu accessible par le premier programme (P1).

Ce nouvel espace mémoire peut être contigu à l'espace mémoire D1 préalablement utilisable par le programme P1, comme représenté sur la figure 3 ; dans ce cas, il peut être prévu un traitement de fusion logique de l'espace mémoire D1 et du nouvel espace mémoire, fusion qui correspond à une extension de l'espace D1 à la zone libérée au cours de l'étape 112, comme représenté sur la **figure 5****,** et/ou à la zone libérée au cours de l'étape 114.

Dans le mode de réalisation décrit précédemment, la détection 112 utilise seulement le premier type d'information logique (indiquant des services communs entre programmes).

En variante, le premier type d'information logique (indiquant des services communs entre programmes) et le deuxième type d'information logique (informations de dépendance entre programmes) sont combinés. Dans cette variante, une libération d'espace mémoire peut n'être mise en oeuvre que si les deux conditions suivantes sont remplies :
- une information du premier type indiquant que le programme P1 et un autre programme rendent un service identique est trouvé dans la mémoire 2, et
- aucune information du second type ne mentionne cet autre programme (ici P2) comme un programme de référence susceptible d'être invoqué par un programme tiers.

Dans ce cas, la libération 114 du programme P2 est mise en oeuvre.

En revanche, si l'une et/ou l'autre des deux conditions n'est pas remplie, la détection est négative, et la libération du programme P2 n'est pas mise en oeuvre.

Par ailleurs, il peut également être prévu d'utiliser le second type d'informations logiques pour effacer automatiquement tous les programmes qui sont rendus inopérants suite à la libération de l'espace C2 (et donc la suppression tacite du programme P2).

Ceci peut être mis en oeuvre par une recherche d'informations logique du deuxième type qui mentionne le programme P2 comme programme de référence. Pour chaque information logique du second type trouvée, on libère la zone mémoire contenant le code du programme tiers identifié par cette information logique.

Lorsque la carte électronique 1 est embarquée dans et/ou coopère avec un terminal comprenant des moyens de saisie, l'étape de libération 112 d'un programme mémorisé dans la mémoire 2 peut également être déclenchée en réponse à l'acquisition, par les moyens de saisie, de données représentatives d'une commande de suppression du programme correspondant.

Dans le mode de réalisation illustré sur les figures 3 à 5, les zones de données D1 et D2 sont représentées comme étant distinctes.

En variante, une zone de données D accessible non pas spécifiquement par un programme, mais par (au moins) les deux programmes P1 et P2, est allouée, cette allocation correspondant aux étapes 104 et 110 (on a alors D = D1 U D2).

Dans cette variante, l'étape de détection 112 peut comprendre une identification du programme qui commande, ou a commandé l'écriture (P1 dans le cas qui précède), avant de procéder à une recherche d'informations logiques mentionnant ce programme identifié.

La présente invention ne se limite pas à un procédé appliqué à des applications bancaires ; des applications d'autres types peuvent faire l'objet du procédé décrit ci-dessus, pourvu qu'elles rendent un service identique.

## Revendications

1. Procédé de gestion d'une mémoire (2) de carte électronique (1), la carte électronique (1) étant apte à exécuter un premier programme (P1) et un deuxième programme (P2), le procédé comprenant des étapes de :
• allocation (100) dans la mémoire (2) d'un premier espace mémoire (D1) accessible par le premier programme (P1),
• allocation (106) dans la mémoire (2) d'un deuxième espace mémoire (C2) mémorisant le code du deuxième programme (P2),
le procédé étant **caractérisé par** des étapes de :
• détection (112) d'une première écriture de données sur instruction du premier programme dans le premier espace mémoire (D1),
• détermination d'une information indiquant si le premier programme (P1) et le deuxième programme (P2) mettent en oeuvre ou non un service identique,
• libération (114) du deuxième espace mémoire (C2) en réponse à la détection (112), la libération (114) étant sélectivement mise en oeuvre si l'information indique que les deux programmes mettent tous deux en oeuvre un service identique.

2. Procédé selon la revendication précédente, dans lequel le premier espace mémoire est accessible sélectivement par le premier programme.

3. Procédé selon l'une des revendications précédentes, dans lequel le service identique est un service de transaction bancaire.

4. Procédé selon l'une des revendications précédentes, comprenant en outre une détection de tout programme tiers mémorisé dans la mémoire et configuré pour commander une exécution du deuxième programme, la libération du deuxième espace étant sélectivement mise en oeuvre si aucun programme tiers n'est détecté.

5. Procédé selon l'une des revendications précédentes, comprenant en outre l'allocation, dans la zone de la mémoire rendue disponible par la libération (114) du deuxième espace mémoire (D2), d'un troisième espace mémoire accessible par le premier programme (P1).

6. Produit programme d'ordinateur comprenant des instructions de code de programme pour l'exécution des étapes du procédé selon l'une des revendications précédentes, lorsque ce programme est exécuté par un processeur (4).

7. Carte électronique (1) comprenant :
• au moins un processeur (4) adapté pour exécuter un premier programme (P1) et un deuxième programme (P2), les deux programmes mettant en oeuvre un service identique,
• une mémoire (2) comprenant :
∘ un premier espace mémoire (D1) accessible par le premier programme (P1),
∘ un deuxième espace mémoire (C2) mémorisant le code du deuxième programme (P2),
la carte électronique (1) étant **caractérisée par le fait que** le processeur (4) est configuré pour :
• détecter (112) une première écriture de données dans le premier espace mémoire (D1) provoquée par le premier programme dans le premier espace mémoire (D1), et
• déterminer une information indiquant si le premier programme (P1) et le deuxième programme (P2) mettent en oeuvre ou non un service identique,
• commander la libération (114) du deuxième espace mémoire (2) en réponse à la détection (112), la libération (114) étant sélectivement mise en oeuvre si l'information indique que les deux programmes mettent tous deux en oeuvre un service identique.

8. Carte électronique (1) selon la revendication précédente, dans lequel la mémoire (2) est de type flash ou EEPROM.

9. Utilisation d'une carte électronique (1) selon l'une des revendications 7 ou 8 comme carte personnelle d'authentification.

## Patentansprüche

1. Verfahren zur Verwaltung eines Speichers (2) einer Elektronikkarte (1), wobei die Elektronikkarte (1) imstande ist, ein erstes Programm (P1) und ein zweites Programm (P2) auszuführen, wobei das Verfahren die Schritte umfasst:
• Zuordnen (100) in dem Speicher (2) eines ersten Speicherplatzes (D1), auf den das erste Programm (P1) zugreifen kann,
• Zuordnen (106) in dem Speicher (2) eines zweiten Speicherplatzes (C2), der den Code des zweiten Programms (P2) speichert,
wobei das Verfahren durch die Schritte gekennzeichnet ist:
• Erfassen (112) eines ersten Schreibens von Daten auf Befehl des ersten Programms auf dem ersten Speicherplatz (D1),
• Bestimmen einer Information, die darauf hinweist, ob das erste Programm (P1) und das zweite Programm (P2) einen identischen Service anwenden oder nicht,
• Freigeben (114) des zweiten Speicherplatzes (C2) als Reaktion auf das Erfassen (112), wobei das Freigeben (114) selektiv angewendet wird, wenn die Information darauf hinweist, dass die beiden Programme beide einen identischen Service anwenden.

2. Verfahren nach dem vorstehenden Anspruch, wobei auf den ersten Speicherplatz selektiv das erste Programm zugreifen kann.

3. Verfahren nach einem der vorstehenden Ansprüche, wobei der identische Service ein Banktransaktionsservice ist.

4. Verfahren nach einem der vorstehenden Ansprüche, weiter umfassend ein Erfassen von jedem dritten Programm, das in dem Speicher gespeichert ist, und konfiguriert ist, um eine Ausführung des zweiten Programms anzusteuern, wobei das Freigeben des zweiten Speicherplatzes selektiv umgesetzt wird, wenn kein drittes Programm erfasst worden ist.

5. Verfahren nach einem der vorstehenden Ansprüche weiter umfassend das Zuordnen in der Zone des Speichers, die durch das Freigeben (114) des zweiten Speicherplatzes (D2) verfügbar gemacht wurde, eines dritten Speicherplatzes, auf den das erste Programm (P1) zugreifen kann.

6. Computerprogrammprodukt, Programmcodebefehle zur Ausführung der Schritte des Verfahrens nach einem der vorstehenden Ansprüche umfassend, wenn das Programm durch einen Prozessor (4) ausgeführt wird.

7. Elektronikkarte (1), umfassend:
• zumindest einen Prozessor (4), der angepasst ist, um ein erstes Programm (P1) und ein zweites Programm (P2) auszuführen, wobei die beiden Programme einen identischen Service anwenden,
• einen Speicher (2) umfassend:
∘ einen ersten Speicherplatz (D1), auf den das erste Programm (P1) zugreifen kann,
∘ einen zweiten Speicherplatz (C2), der den Code des zweiten Programms (P2) speichert,
wobei die Elektronikkarte (1) **dadurch gekennzeichnet, ist, dass** der Prozessor (4) konfiguriert ist, um:
• ein erstes Schreiben von Daten auf dem ersten Speicherplatz (D1), hervorgerufen durch das erste Programm auf dem ersten Speicherplatz (D1) zu erfassen (112),
• eine Information zu bestimmen, die darauf hinweist, ob das erste Programm (P1) und das zweite Programm (P2) einen identischen Service anwenden oder nicht,
• das Freigeben (114) des zweiten Speicherplatzes (2) als Reaktion auf das Erfassen (112) anzusteuern, wobei das Freigeben (114) selektiv angewendet wird, wenn die Information darauf hinweist, dass die beiden Programme beide einen identischen Service anwenden.

8. Elektronikkarte (1) nach dem vorstehenden Anspruch, wobei der Speicher (2) ein Flash- oder EEPROM-Speicher ist.

9. Verwendung einer Elektronikkarte (1) nach einem der Ansprüche 7 oder 8 als persönliche Authentifizierungskarte.

## Claims

1. Method for managing a memory (2) of an electronic card (1), the electronic card (1) being able to execute a first program (P1) and a second program (P2), the method comprising steps of:
• allocating (100), in the memory (2), a first memory space (D1) accessible to the first program (P1),
• allocating (106), in the memory (2), a second memory space (C2) storing the code of the second program (P2),
the method being **characterised by** steps of:
• detecting (112) a first write of data caused by the first program in the first memory space (D1),
• determining information indicating whether or not the first program (P1) and the second program (P2) implement an identical service,
• releasing (114) the second memory space (C2) in response to the detection (112), the release (114) being selectively implemented if the information indicates that the two programs both implement an identical service.

2. Method according to the preceding claim, in which the first memory space is accessible selectively to the first program.

3. Method according to one of the preceding claims, in which the identical service is a bank transaction service.

4. Method according to one of the preceding claims, further comprising a detection of any third program stored in the memory and configured to demand execution of the second program, the release of the second space being selectively implemented if no third program is detected.

5. Method according to one of the preceding claims, further comprising the allocation, in the area of the memory made available by the release (114) of the second memory space (D2), of a third memory space accessible to the first program (P1).

6. Computer program product comprising program code instructions for executing the steps of the method according to one of the preceding claims, when this program is executed by a processor (4).

7. Electronic card (1) comprising:
• at least one processor (4) suitable for executing a first program (P1) and a second program (P2), the two programs implementing an identical service,
• a memory (2) comprising:
∘ a first memory space (D1) accessible to the first program (P1),
∘ a second memory space (C2) storing the code of the second program (P2),
the electronic card (1) being **characterised by** the fact that the processor (4) is configured to:
• detect (112) a first write of data in the first memory space (D1) caused by the first program in the first memory space (D1), and
• determine information indicating whether or not the first program (P1) and the second program (P2) implement an identical service,
• demand the release (114) of the second memory space (2) in response to the detection (112), the release (114) being selectively implemented if the information indicates that the two programs both implement an identical service.

8. Electronic card (1) according to the preceding claim, in which the memory (2) is of the flash or EEPROM type.

9. Use of an electronic card (1) according to one of claims 7 or 8 as a personal authentication card.
